(19) **Europäisches Patentamt / European Patent Office / Office européen des brevets**

(11) **EP 4 037 248 A1**

(12) **EUROPEAN PATENT APPLICATION**

(43) Date of publication:
**03.08.2022 Bulletin 2022/31**

(21) Application number: **21305140.2**

(22) Date of filing: **02.02.2021**

(51) International Patent Classification (IPC):
**H04L 9/08** (2006.01) **H04B 10/516** (2013.01)

(52) Cooperative Patent Classification (CPC):
**H04L 9/0858; H04B 10/516; H04L 9/0855**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy**
**02610 Espoo (FI)**

(72) Inventors:
• **ROUMESTAN, François**
**92160 Antony (FR)**
• **GHAZISAEIDI, Amirhossein**
**94240 L'Haÿ-les-Roses (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **EXCESS NOISE REDUCTION FOR CONTINUOUS VARIABLE QUANTUM KEY DISTRIBUTION**

(57) A transmitter (100A) comprises at least one signal processing circuitry (104) configured to convert random bits into baseband digital signals encoding complex constellation points corresponding to the random bits and to apply a frequency upshift to the baseband digital signals to generate up-converted passband digital signals; at least two digital-to-analog converters (106) configured to convert the up-converted passband digital signals into up-converted passband analog signals; at least two linear driver amplifiers (109) configured to amplify the up-converted passband analog signals to generate amplified analog signals; an electro-optical modulator (107) configured to modulate a laser source signal to generate a coherent optical signal modulated by the amplified analog signals. A receiver (100B), comprises a coherent receiver circuit (112) configured to extract input symbols encoding random bits of a random key from a modulated optical signal and to generate an electrical signal; an analog-to-digital converter, ADC, (113) for generating a digital signal from the electrical signal; at least one digital signal processing circuitry (115) configured to apply a frequency downshift to the digital signal to generate a down-converted digital signal and to extract random bits from the down-converted digital signal.

FIG. 1

EP 4 037 248 A1

**Description**

TECHNICAL FIELD

Various example embodiments relate generally to method and apparatuses for excess noise reduction for continuous variable quantum key distribution (CV-QKD).

BACKGROUND

Quantum Key Distribution (or QKD) is a secure communication method taking advantage of Heisenberg uncertainty principle. A typical framework is the following: Alice (sender side) and Bob (receiver side) are willing to produce a shared random key that will serve to generate a secret key in a cryptographic protocol such as the one-time pad. In order to do so they will communicate random data on an unsecure quantum channel such as an optical fibre.

If a third party, call her Eve, wants to eavesdrop on the quantum signal then Eve must perform a measurement that will disrupt the channel. Alice and Bob can evaluate this disturbance and estimate the quantity of information obtained by Eve, e.g. by detecting on receiver side an increase of the variance of the noise. Finally, Alice and Bob can extract or generate a secret key from at least a portion of the shared random key left untouched by Eve: the secret key may therefore be shorter than the shared random key transmitted by Alice. This extraction process may be monitored by communicating on a second classical channel. This classical monitoring channel is assumed to be an authenticated channel. The article by F. Grosshans and P. Grangier, entitled 'Continuous Variable Quantum Cryptography Using Coherent States', Phys. Rev. Lett., vol. 88, no. 5, p. 057902, Jan. 2002, doi: 10.1103/PhysRevLett.88.057902, discloses details of an efficient CV-QKD protocol (referred to as the GG02 protocol) and how to implement the estimation of the quantity of information obtained by Eve.

Eve cannot intercept the signal without introducing transmission noise. In the QKD system disclosed herein, the quadrature values act like the position and momentum of a particle (e.g. photon) that, according to the Heisenberg principle, cannot be simultaneously and precisely determined by Eve. The uncertainty principle applies hence to any measurement performed by Eve on any of the two quadratures and guarantees that an increase in the variance observed by Bob is produced. Alice and Bob can detect the increase of variance produced by Eve's measurement. To convert this increase of variance in an amount of information (measured in bits), the information theory developed by Shannon may be used. The Shannon theory makes the link between this variance and the quantity of information obtained by Eve. The GG02 protocol defined by Grosshans and Grangier cited in introduction, using ordinary lasers and homodyne detections, may be used with this respect.

As of today, the inventors are aware of two approaches to implement QKD protocols. On the one hand, Discrete Variable QKD (or DVQKD) which enables the best performance at longer distances. However, its implementation is complex and requires expensive hardware components based on single-photon devices, ambient low temperature for the receiver, and careful control of the hardware. On the other hand, Continuous Variable QKD (or CV-QKD) is closer to the classical communication systems and can be implemented using off-the-shelf telecom equipment operating at realistic field conditions.

According to CV-QKD security proofs, the best performance is achieved when encoding the random data on a Gaussian modulation. Unfortunately, perfect Gaussian modulation would include infinite constellation points and is not implementable in digital hardware. Experimental systems use Gaussian modulations but without solution for the coding problems. Also CV-QKD systems are working with discrete modulations such as QPSK.

More generally, whatever the modulation scheme used in a QKD system for encoding the random data, any noise generated by the system that cannot be monitored by Bob has to be attributed to Eve's measurement. This may severely worsen the secret communication rate. This noise has to stay below a given threshold in order for the secret key distribution to be efficient and reliable.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, an apparatus is provided. The apparatus comprises: a laser source configured to generate a source signal; a quantum random number generator configured to generate random bits; at least one signal processing circuitry configured to convert the random bits into baseband digital signals encoding complex constellation points corresponding to the random bits and to apply a frequency upshift to the baseband digital signals to generate up-converted passband digital signals; at least two digital-to-analog converters configured to convert the up-converted passband digital signals into up-converted passband analog signals; at least two linear driver amplifiers configured to amplify the up-converted passband analog signals to generate amplified analog signals; an electro-optical modulator configured to modulate the source signal to generate a coherent optical signal modulated by the amplified analog signals.

The baseband digital signals may include pulsed signals having a root-raised cosine, RRC, pulse shape.

The RRC pulse shape may have a roll-off factor above 0.1 or above 0.5.

The electro-optical modulator may be a dual polarization I/Q optical modulator, wherein the modulated coherent optical signal has two polarizations and two subcarriers for each polarization; wherein the at least one signal processing circuitry is configured to generate for each polarization two baseband digital signals encoding respectively the real and imaginary parts of the complex constellation points corresponding to I and Q quadrature values for the two subcarriers of the concerned polarization.

The complex constellation points may be defined according to a probabilistic constellation shaping QAM modulation map defining a mapping function for the random bits.

The apparatus may comprise a power attenuator configured to adjust the variance of the power of the modulated optical signal.

According to a second aspect, an apparatus is provided. The apparatus comprises: a coherent receiver circuit configured to extract input symbols encoding random bits of a random key from a modulated optical signal and to generate an electrical signal; an analog-to-digital, ADC, converter for generating a digital signal from the electrical signal; at least one digital signal processing circuitry configured to apply a frequency downshift to the digital signal to generate a down-converted digital signal and to extract random bits from the down-converted digital signal.

The at least one digital signal processing circuitry may be configured to generate an estimate of an excess noise from an estimate of a total noise minus a sum of an estimate of a shot noise and an estimate of an electrical noise generated by the coherent receiver circuit.

The apparatus may comprise an optical switch configured to switch on and off optical reception by coherent receiver circuit; wherein the at least one digital signal processing circuitry is configured to determine the estimate of the electrical noise when the optical reception by coherent receiver circuit is switched off and to determine the estimate of the shot noise when the optical reception is switched on.

The input symbols may include quantum key distribution, QKD, symbols representing the random bits, wherein the QKD symbols follow a quadrature amplitude modulation, QAM, based Probabilistic Constellation Shaping, PCS, modulation. The input symbols may further include Quadrature Phase Shift Keying, QPSK, pilot symbols temporally multiplexed with the QKD symbols.

## BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows a schematic representation of a QKD system according to one or more examples.
FIG. 2 show the power spectral density of excess noise in an example QKD system.
FIG. 3 show the power spectral density of a modulated signal in an example QKD system.
FIG. 4 shows a comparison of the power spectral density of excess noise of FIG. 2 with the power spectral density of the modulated signal of FIG. 3 on a same scale.
FIG. 5A-5B show features of example pulse signals that may be used in a QKD system according to one or more examples.
FIG. 6 show the variation of the variance of power spectral density of excess noise as a function of a roll factor.
FIG. 7 illustrates performance of a QKD system according to one or more examples.
FIG. 8 illustrates aspects of signal modulation according to one or more examples.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

## DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

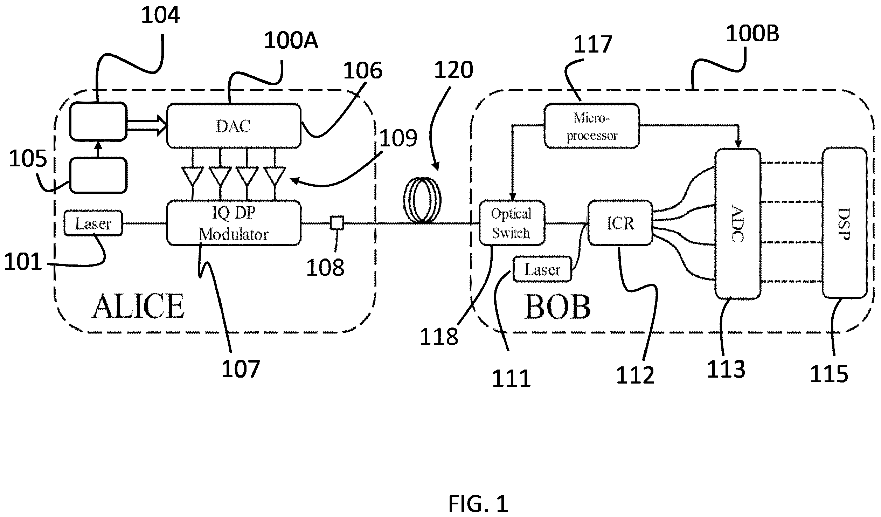

FIG. 1 show a block diagram of an example system for CV-QKD. On sender side (Alice), the apparatus (100A) is also referred to as the sender (100A) or optical transmitter (100A). At receiver side, the apparatus (100B) is also referred to as the receiver (100B) or optical receiver (100B).

The sender (100A) includes a Quantum Random Number Generator (QRNG) (105) configured to generate random bits ($R_i$). A QRNG may for example be implemented by a dedicated physical circuit that generates a sequence of random numbers from an initial value and rely on a mathematical model that guarantees the random character of the sequence.

The sender (100A) also includes a laser source (101) configured to generate a source signal (for example, a coherent source optical signal having a linear polarization and only a horizontal polarization may be used). The laser source (101) may be a continuous wave tunable external cavity semiconductor laser. The laser source (101) may be a tunable laser source with 10 kHz nominal full width at half maximum tuned to 1550 nm wavelength may be used.

The sender (100A) is configured to convert the random bits to be transmitted into symbols, also referred to as the QKD symbols ($S_i$), according to a modulation scheme. The QKD symbols are pulse signals encoding modulation values. More precisely QKD symbols encode complex constellation points corresponding respectively to the random bits, the complex constellation points being defined according to a modulation map of the selected modulation scheme and defining I/Q quadrature values.

Random coherent states encoding the random data to be transmitted from Alice to Bob are generated using an optical modulator (107) controlled by one or more analog electrical signals that include the QKD symbols encoding modulation values corresponding respectively to the random data to be transmitted. The optical modulator (107) may be a dual polarization (DP) I/Q optical modulator or single polarization I/Q optical modulator.

The analog electrical signals are amplified through linear driver amplifiers (109) before being fed to the inputs of the optical modulator (107). The amplified analog electrical signals define modulation values to be applied by the optical modulator (107) to the source optical signal from the laser source (101). The I/Q optical modulator (107) is driven by the amplified analog electrical signals, thereby applying the encoded modulation values to generate a modulated coherent optical signal. The phase and amplitude of the horizontal polarization of the source signal generated by the laser source (101) are modulated using the IQ electro-optical modulator (107) to generate a modulated optical signal including symbols. The symbols include QKD symbols ($S_i$) resulting from conversion of corresponding random bits ($R_i$). The modulated optical signal may further include other symbols, e.g. pilot symbols ($P_j$).

The sender (100A) may further include an optical attenuator (108) configured to adjust the power of the output optical symbols ($X_k$). The signal power is adjusted so that the variance of the symbols after amplification is for example set to a given value $V_A$. The adjustment may come from QKD security proofs that prove that there exists an optimal $V_A$ such that the key rate is maximal.

The modulated optical signal is transmitted through an unsecure quantum channel (120), here an optical fiber (e.g. a conventional single-mode optical fiber). An authenticated classical channel (not represented) may be used in parallel as explained in introduction. On Bob's side, the optical receiver (100B) includes a coherent receiver circuit (112) (e.g. an intradyne coherent receiver ICR) with a free-running laser local oscillator (111), identical to Alice's laser source (101), for coherent detection of the successive symbols ($Y_k$) carried by the received modulated optical signal.

The signal is digitized using for an oscilloscope (113) (e.g. a 1 GHz real-time oscilloscope with 5 GS/s sampling rate) or an analog-to-digital converter (ADC) (113). The digitized signals may be stored for offline digital signal processing by one or more digital signal processing (DSP) circuitry (115).

The digital signal processing (DSP) circuitry (115) is configured to extract and decode the QKD symbols ($S_i$) from the detected symbols ($Y_k$). Several decoding methods may be applicable and they vary in dependence of the modulation scheme used on transmitter side. These decoding methods are not considered relevant for understanding this disclosure.

In such a CV-QKD system, several types of noise are generated: quantum shot noise, electrical noise and excess noise. The excess noise may be defined as an additive white Gaussian noise that is observed by Bob on the CV-QKD signal that cannot be attributed to either the quantum shot noise or the electrical noise of the receiver (100B). The electrical noise is the noise generated on receiver side, mainly by the ICR. The quantum shot noise is the noise induced by quantum uncertainty of the measurement. It may be modelled as a white additive Gaussian noise.

The variance of each of these types of noise may be expressed in Shot Noise Unit (SNU). If $N_o$ is the value of the shot noise power (in Watts for example), then the power of the QKD modulation is $V_A N_o$ in Watts and the value of the shot noise is equal to 1 SNU.

By estimating the excess noise compared to the quantum shot noise, we obtain a bound on the increase of noise induced by Eve's measurement. The variance $\xi$ of the excess noise is a parameter for measuring the system performance. The higher it is the shorter will be the length of the secure key that can be extracted from the random data left untouched by Eve. Therefore, it is a challenge to propose algorithms as optimal as possible.

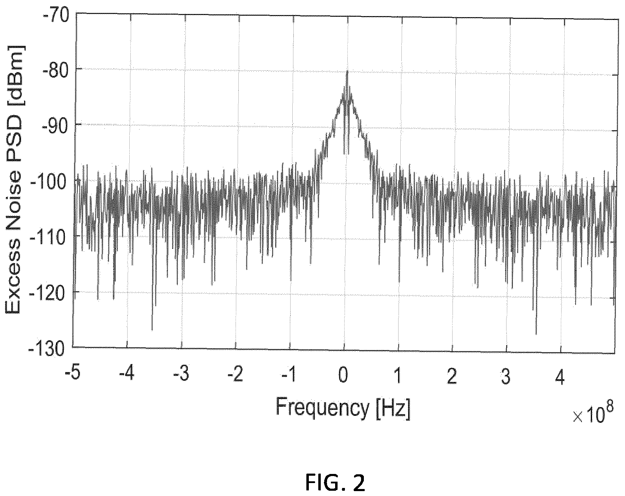

The excess noise may be due to various phenomena. The unsecure quantum channel attenuates the transmitted optical signal by the transmittance T and adds excess noise. Excess noise may also come from the system and DSP impairments on receiver side. Also it is a finding that the linear driver amplifiers (109) in the transmitter have a cutoff frequencies of about 20 MHz and this induces an important low frequency excess noise on the channel with a range of several tens of MHz, as illustrated in FIG. 2. This figure shows the power spectral density of the excess noise for a given example QKD system. For a 1 GBd signal this excess noise is around 0.1 SNU at Bob's side. The available security proofs cannot guarantee any secret key with such magnitudes of excess noise at the target range of 15 km for the transmission of the quantum keys.

It is a finding that the low frequency components (i.e. frequencies around DC component) of the excess noise have to be avoided in order to not suffer from noise induced by the cutoff frequency of the linear driver amplifiers and thereby to reduce the excess noise. This allows to divide the excess noise by a factor of 3 approximately and allow to implement a CV-QKD system with a high baud rate (e.g. more than 100 Mbaud) and a range at least equal to 15 km.

In order to get rid of this low frequency component of the excess noise, a frequency shift $\Delta f$ is applied to the modulated signal carrying the random bits before transmission through the unsecure quantum channel. This frequency shift $\Delta f$ may be applied in digital domain or analog domain, but before amplification by the linear driver amplifiers so as to avoid the noise induced by the cut-off frequency of these linear driver amplifiers. The frequency shift $\Delta f$ may for example be equal to 500 MHz, so that the used bandwidth is 100 to 900 MHz.

The modulated signal $s(t)$ carrying the symbols (e.g. the QKD symbols ($S_i$) and, optionally, other symbols like pilot symbols ($P_j$)) before the frequency shift is referred to herein as the baseband signal. The modulated signal after the frequency shift is referred to herein as the up-converted passband signal $s_{\text{upshift}}(t)$ and is such that:

$$s_{\text{upshift}}(t) = s(t) \times \exp(i2\pi\Delta f \times t) \quad (EQ1).$$

where $s(t)$ and $s_{\text{upshift}}(t)$ are complexed signals defined in I / Q plane and t represent the current time. At receiver side, an inverse frequency shift is applied to retrieve the baseband signal such that

$$s(t) = s_{\text{upshift}}(t) \times \exp(-i2\pi\Delta f \times t) \quad (EQ2)$$

As represented by FIG. 1, one or more digital signal processing (DSP) circuitry (104) may be used to apply the frequency shift $\Delta f$. The up-converted passband digital signals at the output of the DSP (104) are transmitted to a digital-to-analog converter (106) to generate corresponding up-converted passband analog signals. The up-converted passband analog signals are amplified by linear driver amplifiers (109) to generate amplified analog signals.

When the electro-optical modulator (107) is a dual polarization I/Q optical modulator, the electro-optical modulator (107) generates a modulated coherent optical signal having two polarizations and two subcarriers for each polarization. The signal processing circuitry (104) is configured to generate for each polarization two baseband digital signals encoding respectively the real and imaginary parts of the complex constellation points corresponding to I and Q quadratures values for the two subcarriers of the concerned polarization. Each baseband digital signal is converted to an analog corresponding signal by a DAC and amplified by linear driver amplifier: therefore four DACs and four corresponding linear driver amplifiers may be used with a dual polarization I/Q optical modulator. The data rate may be for example up to 400 MBaud for a dual polarization signal. Using two orthogonal polarizations enables to multiply the data rate by a factor 2.

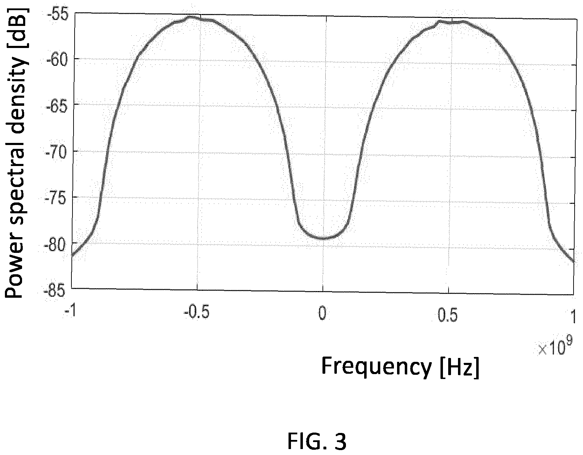

The frequency shift is such that no signal is modulated around the DC component (i.e. 0 Hz). An example of up-converted passband signal is shown in FIG. 3. The modulated signal is here a digital dual carrier signal composed of two 400 MBd signals modulated on digital subcarriers centered around -500 MHz and 500 MHz. According to another example, only one carrier is used which is centered around 500 MHz or -500 MHz such that no signal component is present around DC.

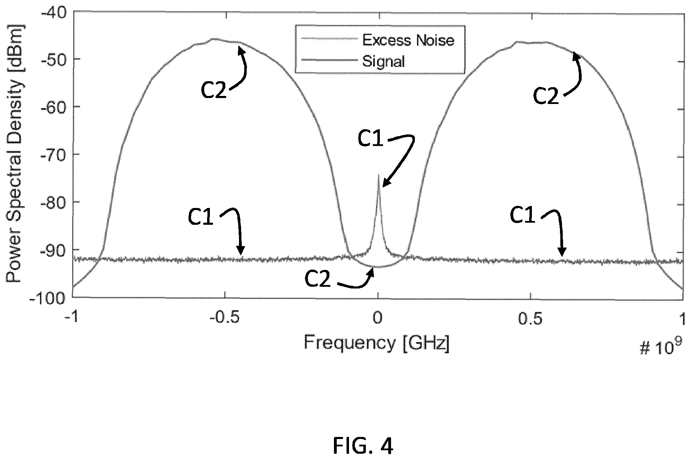

A comparison of the power spectral density of the excess noise (curve C1) and the up-converted digital passband signal (curve C2) is shown by FIG. 4 for a digital dual carrier signal having two subcarriers centered around -500 MHz and 500 MHz. This figure illustrates how the data signal is digitally designed in order to avoid the main source of excess noise around DC, that is, by digitally up-converting the signal spectrum, the excess DC noise becomes negligible.

This frequency shift allows the excess noise to be below a threshold. The threshold may be dependent on parameters such as the channel loss, the signal power, the code rate, etc... It may be given by CVQKD security proofs. A typical threshold is around 0.1 SNU to allow secret key distribution for a target range of at least 15 km for the unsecure channel. Experimental results show that with the frequency shift the excess noise on each subcarrier may be around 0.007 *SNU* and exhibits a flat excess noise spectrum. This allows to implement a CVQKD transmission having a range up to 40 km. One can obtain for example 25 Mbps of secure key with a 25 km fiber.

According to an example, the frequency shift is selected such that the frequency of a subcarrier used for encoding the symbols may be at the center of the usable bandwidth $[f_c, f_B]$. The usable bandwidth may vary with cut-off frequencies and / or bandwidths of one or more hardware devices used in the receiver (100A) and / or the transmitter (100B). For example, $f_c$ may correspond to the lower cutoff frequency of the linear driver amplifier (109). For example $f_B$ may correspond to the minimum between the bandwidths of the DAC (106) or the ADC (113), the driver amplifiers (109) and the optical modulator (107).

According to an example, the baudrate of the encoded symbols for a given roll-off may be maximized such that the modulated signal at the output of the optical modulator fits inside the usable bandwidth. For a given baudrate $1/T$ where T is the symbol period, the signal with root raised cosine pulse with roll-off factor $\beta$, occupies a bandwidth $(1 + \beta)/T$. The roll factor $\beta$ and period $T$ may be chosen such that $(1 + \beta)/T < f_B - f_C$.

In order to estimate the variance of the excess noise, the optical shot noise and the electrical noise are calibrated.

To calibrate the electrical noise of the coherent receiver circuit (ICR) (112), both inputs of the ICR (112) are switched off: the output of the ICR (112) is then the electrical noise of the ICR (112). The electrical noise is an additive white Gaussian noise with variance $V_{el}$. We assume that $V_{el}$ is constant throughout the transmission.

To switch off the coherent receiver circuit (ICR) (112), an optical switch (118) is used to switch on and off optical reception by the coherent receiver circuit (112) in order to perform calibration of the shot noise. A fast optical switch may be used, having for example a 280 ns response time. A microprocessor (117) may be used to control the optical switch and trigger the oscilloscope / ADC (113) such that shot noise calibration and signal acquisition are performed consecutively, for example with 0.2 ms delay.

To calibrate the shot noise, the signal input of the ICR (112) and the laser local scillator (111) are kept on. The output of the ICR (112) is the sum of the electrical noise of the ICR (112) and the optical shot noise. It is an additive white Gaussian noise with variance $N_o + V_{el}$. Using the previously calibrated value $V_{el}$, the variance $N_o$ of the shot noise is obtained.

However, the variance of the shot noise $N_o$ is not constant throughout the transmission. Before each acquisition of a modulated signal carrying input symbols encoding random bits, an acquisition of the shot noise with the same fiber is done. In quantum optics, the shot noise is also called "vacuum noise" and is the noise present when the input is in a "vacuum state", i.e. a coherent state with no light. The acquisitions and processing of the data signal and shot noise are performed by the DSP using the same digital processing functions. A noise estimation function is applied by the DSP (115) to the acquired data signal to determine an estimate of the total noise. To allow a comparison and the computation of the excess noise, the same noise estimation function is applied by the DSP (115) to the acquired shot noise to determine an estimate of the shot noise in the absence of data signal. Then the excess noise is determined based on the estimates of the total noise, signal, the shot noise and the electrical noise. To obtain high precision estimation of the excess noise, a frequent calibration of the shot noise may be performed. For example, the calibration of the shot noise $N_o$ may be repeated every 5 to 10 ms.

The excess noise is estimated as the variance of the total noise observed by Bob minus the sum of variance of the electrical noise and shot noise ($N_o + V_{el}$).

In one or more embodiments, the baseband digital signals include pulsed signals having a Root Raised Cosine (RRC) pulse shape with roll-off factor $\gamma$. The roll-off factor $\gamma$ is adjustable between 0 and 1.

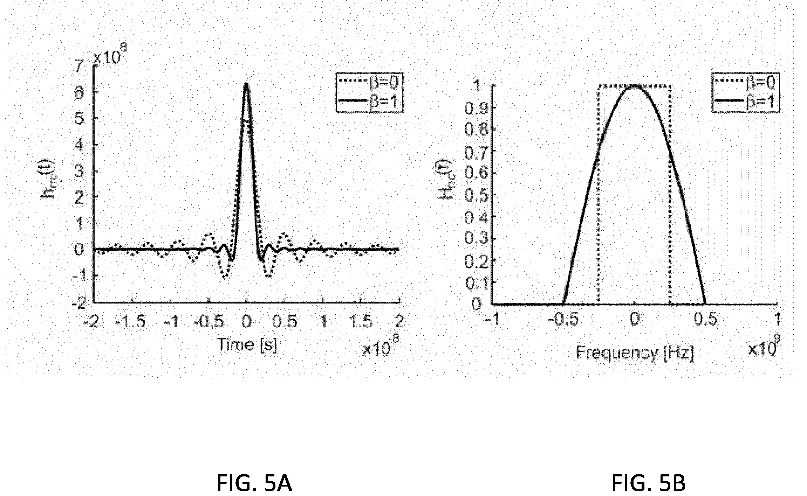

FIGS. 5A-5B show a RRC pulse in time domain (FIG. 5A) and frequency domain (FIG. 5B). The raised-cosine with roll-off β, symbol period T, can be defined in the frequency domain by

$$H_{rc}(f) = \begin{cases} 1, & |f| \leq \frac{1-\beta}{2T} \\ \frac{1}{2}\left[1 + \cos\left(\frac{\pi T}{\beta}\left[|f| - \frac{1-\beta}{2T}\right]\right)\right], & \frac{1-\beta}{2T} < |f| < \frac{1+\beta}{2T} \\ 0, & \text{otherwise} \end{cases}$$

The root raised cosine is given by the following formula:

$$|H_{rrc}(f)| = \sqrt{|H_{rc}(f)|}$$

The higher the roll-off factor, the higher are the ringings of a RRC pulse in time domain and the larger the bandwidth of the RRC pulse in frequency domain. Also the higher the roll-off factor, the lower the timing recovery error in the system. Timing recovery algorithms are used to determine a correct time to sample symbol pulse shapes. The timing recovery error is also a factor that may increase the excess noise in a CV-QKD system.

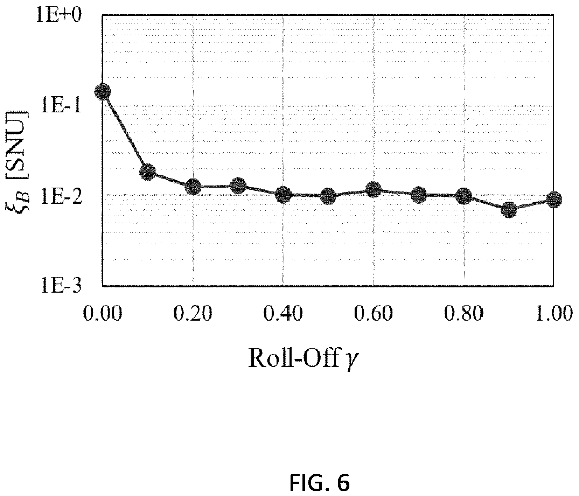

FIG. 6 shows the impact of the roll-factor on the excess noise. The average excess noise variance variations measured in SNU over the roll off factor $0 \leq \gamma \leq 1$ are shown in FIG. 6. The excess noise variance decreases greatly between $\gamma = 0$ and $\gamma = 0.1$ then the excess noise variance decreases more slowly. The roll-off factor may be adjusted such that the average excess noise variance is below a threshold. For example the roll-off factor y may be selected above 0.1 or even above 0.5 to get a low and more stable excess noise variance.

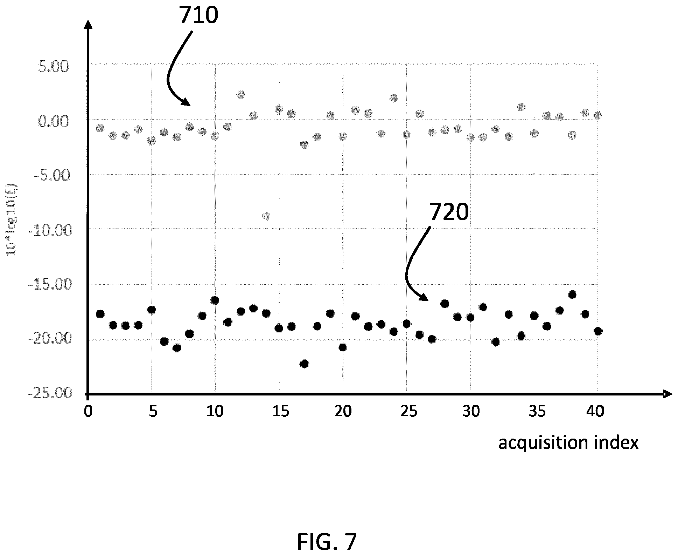

FIG. 7 shows a comparison between the excess noise measured in SNU (here with a log scale) with and without the frequency shift of 500 MHz for a number of 40 independent measurements performed using a same QKD system. The gray dots 710 (upper part of the diagram) represent the excess noise measures obtained by using on transmitter side a configuration including single polarization, a rate of 400 MBd for the RRC pulse signals having a roll factor of 1, a PCS 2014 QAM modulation scheme, without frequency shift. The black dots 720 (lower part of the diagram) represent the excess noise measures obtained using the same configuration on transmitter side but with a frequency shift of 500 MHz. The average SNU value of the gray dots 710 is 8.86e-1 SNU and the average SNU value of the black dots 720 is 1.41e-2 SNU. A reduction of the excess noise by nearly 20dB is achieved.

A CV-QKD system using a PCS N-QAM modulation scheme will be described with more details, where N is the cardinality. However the method and apparatuses for reducing the excess noise that are described herein are applicable to any other modulation scheme.

This type of modulation enables approaching the Shannon capacity. Compared to other approaches based on QPSK modulation (see for example D. Milovancev et al., "Spectrally-Shaped Continuous-Variable QKD Operating at 500 MHz Over an Optical Pipe Lit by 11 DWDM Channels", in Optical Fiber Communication Conference 2020, paper T3D.4, Mar. 2020), the QAM-based PCS modulation allows to use stronger and more efficient Gaussian security proofs and also the use of coding techniques developed for classical (i.e. non quantum) communication.

A high cardinality of the QAM constellation may be used with a distribution shaped like a Gaussian distribution, for example a PCS 1024 QAM. The cardinality may be for example 512, 1024, 2048 or 4096 or higher. A high cardinality N (>=256) of this PCS N-QAM modulation scheme is a discretized version of the Gaussian modulation and makes it possible to use a Gaussian approximation for the security analysis and proof. In other word it is possible to use the Secret (or Secure) Key Rate (SKR) formulas of Gaussian modulation CVQKD, hence enabling much better performance than QPSK formulas.

A mapping function may be used to convert using any known method the random bits generated by the quantum number generator (105) into I/Q quadrature values representing QKD digital symbols such that the I/Q quadrature values follow a probabilistic constellation shaping (PCS) QAM modulation.

The IQ quadrature values are converted into an electrical analog control signals for the IQ electro-optical modulator (107). The phase and amplitude of the horizontal polarization of the source signal generated by the laser source (101) are modulated using the IQ electro-optical modulator (107) to generate a modulated optical signal including symbols $S_i$ resulting from conversion of corresponding random bits $R_i$. The modulation is performed by the IQ electro-optical modulator (107) under the control of the electrical control signal converted into an optical modulation signal by the IQ electro-optical modulator (107). The IQ electro-optical modulator (107) may be an IQ dual polar modulator, for example, a Lithium Niabate electro-optics modulator.

In one or more embodiments, the QKD symbols $S_i$ resulting from conversion of random bits $R_i$ are multiplexed temporally with QPSK pilot symbols $P_j$ to generate the baseband digital signal. The QKD signal is interleaved (multiplexed) in time with QPSK pilot symbols to allow random key decoding at receiver side. Compared to the use of pilot-tones used in approaches based on QPSK modulation, the use of QPSK pilot symbols offers two advantages: it is more efficient relatively to bandwidth occupation and offers a simpler implementation hence cheaper equipment.

The interleaved symbols are noted $X_k$. The QKD symbols (e.g. PCS 1024 QAM symbols) may be interleaved with the pilot symbols by a computer or digital circuitry for example in the digital signal processing circuit (115) described by reference to FIG. 1. The frequency shift $\Delta f$ is then applied to the baseband digital signal carrying the interleaved symbols to generate the up-converted passband digital signal to be converted to an up-converted passband digital signal.

The CV-QKD protocols requires that only a few photons per symbols are sent by Alice. This constraint imposes very low optical transmitted power. Hence, Bob receives a particularly noisy and low power signal (<< 0 dB). In such conditions classical DSP algorithms for coherent detection tend to perform very poorly. To allow Bob to retrieve Alice's data in a more efficient way, the QKD symbols are interleaved in time with QPSK pilots symbols with higher amplitude such that the variance of the pilots symbols is $V_{pil} > V_A$. For example, the CVQKD signal encoding the random bits is interleaved in time with a deterministic sequence of QPSK symbols of 13 dB higher amplitude compared to the QKD symbols. The sequence of QPSK symbols is public information shared by Alice and Bob. The QPSK symbols are used by the DSP at receiver to recover the random bits sent by Alice from the received symbols.

The frequency of these pilots $P_j$ and the interleaving pattern may be optimized depending on the quality of the unsecured quantum channel: it may be 1 pilot symbol $P_j$ after 2 QKD symbols $S_i$, 1 pilot symbol $P_j$ after 3 QKD symbols $S_i$, 2 pilot symbols $P_j$ after 2 QKD symbols $S_i$, etc. This approach is different from the approach using pilot-tone multiplexed in both frequency and polarization. It has the advantage of being more optimal in terms of bandwidth occupation. It is also simpler to implement.

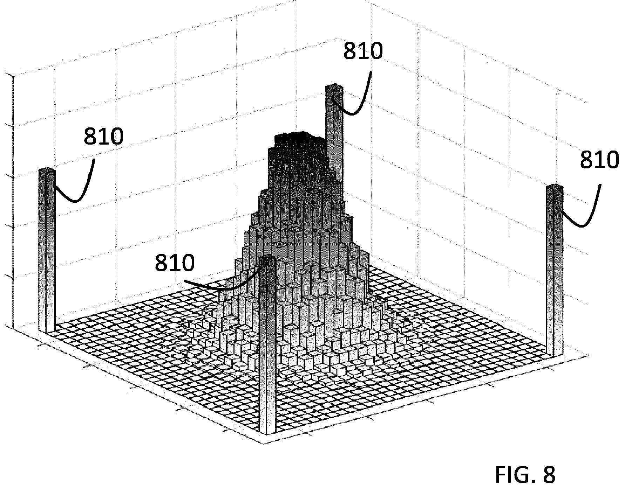

In FIG. 8, a PCS 1024 QAM distribution is shown together with the QPSK pilot symbols. The PCS 1024 QAM allows a discrete and precise approximation of a Gaussian source signal. The QKD constellation is visible in the centre of the distribution and recognizable by its Gaussian form. The QPSK pilot symbols (810) are also clearly identified as 4 bars located at the extreme points of the distribution. For QPSK, 4 pilot symbols may be used, each pilot signal corresponding to a point on a constellation diagram, the 4 points being equispaced around a circle. All the QPSK pilot symbols have therefore the same amplitude and have known phase values equally distributed. E.g. for QPSK, 4 pilot symbols are used having respective fixed phases values 45°, 135°, 225° and 315°.

Probabilistic constellation shaping (PCS) is a technology that provides fine rate adaptability together with high sensitivity approaching the Shannon limit. QAM-based PCS uses a base modulation format which is a quadrature amplitude modulation (QAM) format, for example a square QAM such as 16QAM and 64QAM and changes the probability of the occurrence of complex constellation points. By adjusting the variance of the probability distribution, PCS enables fine rate adaptation and generation of a signal close to the optimum Gaussian distribution for a linear channel. The probability distribution is here the Maxwell-Boltzmann function.

The PCS probability distribution may be realized by an algorithm implemented by a computer or circuitry, called here distribution matcher, which receives as input long blocks of binary random information bits, and uses source coding techniques, such that the frequency of occurrence of symbols in the corresponding output block correspond to the probability given by the target probability distribution, which is here the Maxwell-Boltzmann function. See for example the document by Georg Böcherer et al, entitled "Probabilistic Shaping and Forward Error Correction for Fiber-Optic Communication Systems", Journal of Lightwave Technology, Vol. 37, Issue 2, pp. 230-244, (2019).

A decoding method for random bits encoded using PCS-1024 QAM is disclosed in EP Application filed November 20, 2020 under No. 20306420.9 by the same inventors, the content of which is hereby incorporated by reference in its entirety. This decoding method may be implemented by one or more digital signal processing circuits, e.g. the digital signal processing circuit (115) shown in FIG. 1 or a separate digital signal processing circuit.

It should be appreciated by those skilled in the art that any functions, engines, block diagrams, flow diagrams, state transition diagrams and / or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

Although a flow chart may describe operations as a sequential process, many of the operations may be performed in parallel, concurrently or simultaneously. In addition, the order of the operations may be re-arranged or may sometimes be executed in the reverse order, depending upon the operations involved. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this application, the term "circuit" or "circuitry" may refer to one or more or all of the following:

(a) hardware-only circuit implementations (such as implementations in only analog and/or digital circuitry) and

(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and

(c) hardware circuit(s) and or processor(s), such as a microprocessor(s) or a portion of a microprocessor(s), that requires software (e.g., firmware) for operation, but the software may not be present when it is not needed for operation."

This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

List of abbreviations

CVQKD    Continuous Variable Quantum Key Distribution
DVQKD    Discrete Variable Quantum Key Distribution
DSP      Digital Signal Processing
QPSK     Quadrature Phase Shift Keying
SKR      Secret (or Secure) Key Rate
Mbps     Megabits per second
SNU      Shot Noise Unit
QAM      Quadrature Amplitude Modulation
PCS      Probabilistic Constellation Shaping

**Claims**

1. An apparatus (100A) comprising

   - a laser source (101) configured to generate a source signal;
   - a quantum random number generator (105) configured to generate random bits;
   - at least one signal processing circuitry (104) configured to convert the random bits into baseband digital signals encoding complex constellation points corresponding to the random bits and to apply a frequency upshift to the baseband digital signals to generate up-converted passband digital signals;
   - at least two digital-to-analog converters (106) configured to convert the up-converted passband digital signals into up-converted passband analog signals;
   - at least two linear driver amplifiers (109) configured to amplify the up-converted passband analog signals to generate amplified analog signals;
   - an electro-optical modulator (107) configured to modulate the source signal to generate a coherent optical signal modulated by the amplified analog signals.

2. The apparatus according to claim 1, wherein the baseband digital signals include pulsed signals having a root-raised cosine, RRC, pulse shape.

3. The apparatus according to claim 2, wherein the RRC pulse shape has a roll-off factor above 0.5.

4. The apparatus according to claim 1,
   wherein the electro-optical modulator (107) is a dual polarization I/Q optical modulator, wherein the modulated coherent optical signal has two polarizations and two subcarriers for each polarization;
   wherein the at least one signal processing circuitry (104) is configured to generate for each polarization two baseband digital signals encoding respectively the real and imaginary parts of the complex constellation points corresponding to I and Q quadrature values for the two subcarriers of the concerned polarization.

5. The apparatus according to claim 1, wherein the complex constellation points are defined according to a probabilistic constellation shaping QAM modulation map defining a mapping function for the random bits.

6. The apparatus according to claim 1, further comprising a power attenuator configured to adjust the variance of the power of the modulated optical signal.

7. An apparatus (100B), comprising:

a coherent receiver circuit (112) configured to extract input symbols encoding random bits of a random key from a modulated optical signal and to generate an electrical signal;
an analog-to-digital converter, ADC, (113) for generating a digital signal from the electrical signal;
at least one digital signal processing circuitry (115) configured to apply a frequency downshift to the digital signal to generate a down-converted digital signal and to extract random bits from the down-converted digital signal.

8. The apparatus according to claim 7,
wherein at least one digital signal processing circuitry (115) is configured to generate an estimate of an excess noise from an estimate of a total noise minus a sum of an estimate of a shot noise and an estimate of an electrical noise generated by the coherent receiver circuit (112).

9. The apparatus according to claim 8 comprising:

an optical switch (118) configured to switch on and off optical reception by coherent receiver circuit (112);
wherein the at least one digital signal processing circuitry is configured to determine the estimate of the electrical noise when the optical reception by coherent receiver circuit is switched off and to determine the estimate of the shot noise when the optical reception is switched on.

10. The apparatus according to any of claims 7 to 9,

wherein the input symbols include quantum key distribution, QKD, symbols representing the random bits,
wherein the QKD symbols follow a quadrature amplitude modulation, QAM, based Probabilistic Constellation Shaping, PCS, modulation.

11. The apparatus according to claim 10,
wherein the input symbols further include Quadrature Phase Shift Keying, QPSK, pilot symbols temporally multiplexed with the QKD symbols.

FIG. 1

EP 4 037 248 A1

FIG. 2

FIG. 3

FIG. 4

FIG. 5A                                                    FIG. 5B

FIG. 6

FIG. 7

EP 4 037 248 A1

FIG. 8

Europäisches
Patentamt

European
Patent Office

Office européen
des brevets

# EUROPEAN SEARCH REPORT

**Application Number**

EP 21 30 5140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKAZAWA MASATAKA ET AL: "QAM Quantum Noise Stream Cipher Transmission Over 100 km With Continuous Variable Quantum Key Distribution", IEEE JOURNAL OF QUANTUM ELECTRONICS, IEEE SERVICE CENTER, PISCATAWAY, NJ, USA, vol. 53, no. 4, 1 August 2017 (2017-08-01), pages 1-16, XP011654764, ISSN: 0018-9197, DOI: 10.1109/JQE.2017.2708523 [retrieved on 2017-06-27] * sections III and IV.A; figures 4,5 * | 1-11 | INV. H04L9/08 H04B10/516 |
| A | HOU-MAN CHIN ET AL: "Effect of filter shape on excess noise performance in continuous variable quantum key distribution with Gaussian modulation", ARXIV.ORG, CORNELL UNIVERSITY LIBRARY, 201 OLIN LIBRARY CORNELL UNIVERSITY ITHACA, NY 14853, 14 August 2018 (2018-08-14), XP081256769, * sections 2 and 3; figures 1,2 * | 1-11 | |

TECHNICAL FIELDS
SEARCHED    (IPC)

H04L
H04B

The present search report has been drawn up for all claims

| Place of search | Date of completion of the search | Examiner |
|---|---|---|
| Munich | 28 June 2021 | Manet, Pascal |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20306420

**Non-patent literature cited in the description**

- **F. GROSSHANS ; P. GRANGIER.** Continuous Variable Quantum Cryptography Using Coherent States. *Phys. Rev. Lett.,* January 2002, vol. 88 (5), 057902
- **D. MILOVANČEV et al.** Spectrally-Shaped Continuous-Variable QKD Operating at 500 MHz Over an Optical Pipe Lit by 11 DWDM Channels. *Optical Fiber Communication Conference 2020, paper T3D,* 04 March 2020
- **GEORG BÖCHERER et al.** Probabilistic Shaping and Forward Error Correction for Fiber-Optic Communication Systems. *Journal of Lightwave Technology,* 2019, vol. 37 (2), 230-244